Europäisches Patentamt

European Patent Office

Office européen des brevets

(11) Numéro de publication: **0 227 509**
**A1**

## (12) DEMANDE DE BREVET EUROPEEN

(21) Numéro de dépôt: **86402462.5**

(22) Date de dépôt: **04.11.86**

(51) Int. Cl.⁴: **G 01 C 19/64**

(30) Priorité: **08.11.85 FR 8516601**

(43) Date de publication de la demande:
**01.07.87 Bulletin 87/27**

(84) Etats contractants désignés: **DE GB IT NL SE**

(71) Demandeur: **THOMSON-CSF**
**173, Boulevard Haussmann**
**F-75379 Paris Cedex 08 (FR)**

(72) Inventeur: **Lefevre, Hervé**
**Thomson-CSF SCPI 19, avenue de Messine**
**F-75008 Paris (FR)**

(74) Mandataire: **Lepercque, Jean et al**
**THOMSON-CSF SCPI 19, avenue de Messine**
**F-75008 Paris (FR)**

(54) **Dispositif stabilisateur de la longueur d'onde moyenne d'une source à large spectre, et application au gyromètre à fibre optique.**

(57) Le dispositif comprend placé sur le chemin optique du faisceau émis par la source, un filtre dont le spectre ($SP_{FI}$) est centré sur la longueur d'onde moyenne ($\lambda_0$) du spectre ($SP_S$) émis par la source mais dont la largeur ($\Delta\lambda_{FI}$) est inférieure à celle ($\Delta\lambda_S$) du spectre ($SP_S$) émis.

Application aux gyromètres constitués d'un interféromètre en anneau à fibre optique.

FIG.2

EP 0 227 509 A1

## Description

DISPOSITIF STABILISATEUR DE LA LONGUEUR D'ONDE MOYENNE D'UNE SOURCE A LARGE SPECTRE
ET APPLICATION AU GYROMETRE A FIBRE OPTIQUE

L'invention concerne un dispositif stabilisateur de la longueur d'onde moyenne d'une source de lumière radiante à large spectre notamment pour une source utilisée dans un gyromètre.

On sait qu'un système optique dont le signal de sortie dépend de la longueur d'onde a un facteur d'échelle instable quand celle-ci varie. Parmi les causes de perturbation, les variations de température sont généralement parmi les plus critiques.

Parmi les applications que vise plus particulièrement l'invention, les gyromètres et les dispositifs analogues rentrent dans cette catégorie.

Un gyromètre est composé en général d'un interféromètre en anneau.

Dans un interféromètre en anneau, ou interféromètre de Sagnac, deux faisceaux parcourent en sens opposés un même trajet optique et interfèrent à la sortie de ce trajet. Pour autant qu'une perturbation de ce trajet présente les mêmes caractéristiques pour les deux sens de propagation et ne varie pas pendant la durée du transit de la lumière dans l'interféromètre, les deux faisceaux sont affectés identiquement et leur phase relative demeure inchangée. Les perturbations de ce type sont dites "réciproques". Parce que le temps de transit dans un interféromètre est généralement très petit, les variations d'une perturbation pendant ce temps, sauf si celle-ci est introduite volontairement, sont généralement négligeables.

Mais il existe des perturbations "non réciproques" qui présentent une amplitude différente aux deux sens de propagation, il s'agit d'effets physiques qui, en établissant son orientation complète, détruisent la symétrie de l'espace et du milieu.

Deux effets connus présentent cette propriété :
- l'effet Faraday, ou effet magnéto-optique colinéaire, par lequel un champ magnétique crée une orientation préférentielle du spin des électrons du matériau optique ;
- et l'effet Sagnac, par lequel l'effet inertiel relativiste, où la rotation de l'interféromètre par rapport à un repère galliléen détruit la symétrie des temps de propagation.

L'utilisation de la rotation par rapport à l'espace inertiel conduit à la réalisation de gyromètres à fibre optique et l'utilisation du champ magnétique conduit à la réalisation de capteurs de courant ampèremétriques ou de magnétomètres.

Dans les interféromètres récents, l'anneau est réalisé physiquement par une fibre optique monomode enroulée sur elle-même pour former une bobine de rayon réduit. Cependant la longueur du chemin optique est directement proportionnelle au nombres de spires de la bobine. On peut donc obtenir, malgré un volume très réduit, un chemin optique très long, typiquement de l'ordre du kilomètre.

Un tel interféromètre est utilisé pour la mesure de vitesses de rotation. Cette mesure est effectuée par le biais de la mesure du déphasage entre les ondes parcourant l'anneau en sens opposés.

Or, comme il sera décrit de façon plus détaillée dans ce qui suit, la formule donnant le déphasage entre ces deux ondes dépend linéairement de la longueur d'onde de celles-ci et plus exactement de l'inverse de cette longueur d'onde.

Les ondes circulant dans l'anneau sont issues, après séparation, d'un même faisceau généré par une source de lumière radiante, généralement une source à semiconducteur. Il s'agit par exemple d'une diode superluminescente.

Cette source émet dans un spectre centré sur une longueur d'onde moyenne. Or cette valeur moyenne de la longueur d'onde dépend à son tour de la température de la jonction.

Dans l'Art Antérieur, il a été utilisé diverses méthodes pour stabiliser l'émission. Ces méthodes ont en commun l'utilisation de circuits de contreréaction qui outre leur complexité nécessitent un certain nombre de réglages.

L'invention vise à s'affranchir de ces inconvénients.

L'invention a donc pour objet un dispositif stabilisateur de la longueur d'onde moyenne d'une source d'énergie radiante émettant un faisceau à large spectre, caractérisé en ce qu'il comprend, placé sur le chemin optique dudit faisceau un filtre optique passe-bande à spectre centré sur la dite longueur d'onde moyenne et de largeur inférieure à celle du spectre du faisceau émis par la source.

L'invention a encore pour objet l'application d'un tel dispositif à un gyromètre à fibre optique.

L'invention sera mieux comprise et d'autres caractéristiques et avantages apparaîtront à la lecture de la description qui suit en référence aux figures annexées et parmi lesquelles :
- la figure 1 illustre un exemple d'interféromètre de l'Art Connu ;
- la figure 2 est un diagramme illustrant les spectres d'émission d'une source et de transmission d'un filtre optique ;
- la figure 3 illustre schématiquement un dispositif selon l'invention.

Sans que cela soit limitatif pour fixer les idées, la présente invention sera décrite dans le cadre de l'application préférentielle visée, c'est-à-dire un gyromètre à fibre optique.

Il paraît utile tout d'abord d'en rappeler les principales caractéristiques.

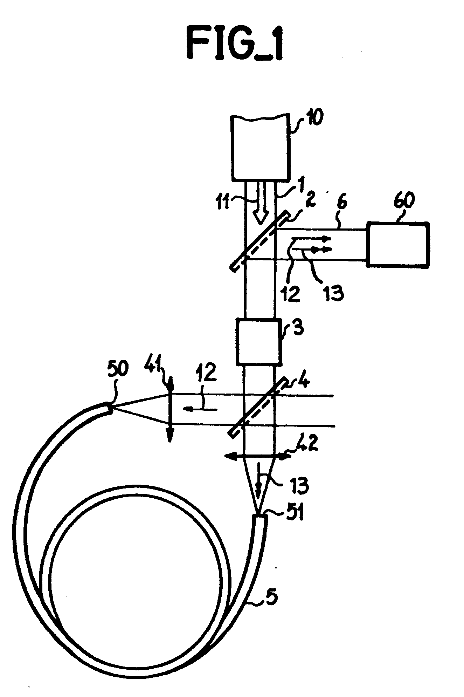

La figure 1 illustre schématiquement un exemple d'interféromètre en anneau selon l'Art Connu.

Sur cette figure 1 est représenté un interféromètre en anneau dont l'anneau est réalisé en fibre optique monomode 5, mais dont le coeur est constitué d'éléments optiques traditionnels. L'addition d'un filtre de mode 3 rend un tel interféromètre strictement réciproque.

Le faisceau incident 11 produit par une source 10 traverse le filtre de mode 3 et se sépare en deux sur une lame semi-transparente 4. Une partie 12 du faisceau est envoyée dans la fibre optique 5 par l'intermédiaire d'une lentille 41 qui le focalise sur l'entrée 50 de la fibre optique 5, tandis que l'autre partie 13 du faisceau est envoyée sur cette même fibre optique 5 par l'intermédiaure d'une lentille 42 qui le focalise sur l'entrée 51 de cette fibre optique 5. Les deux faisceaux parcourent la fibre en sens inverses et sont repris dans le bras de l'interféromètre par la lame semi-transparente 4. Ils retraversent le filtre de mode 3 et sont séparés du faisceau incident par une lame semi-transparente 2 qui les envoie en partie dans un bras de sortie 6 dans lequel on détecte le signal d'interférence, à l'aide d'un photodétecteur 60.

L'utilisation d'une fibre optique monomode 5 comme chemin optique permet d'augmenter très fortement la longueur de ce chemin optique. En effet, la fibre optique est habituellement enroulée pour former une bobine multispire. On réalise ainsi des gyroscopes très sensibles.

Cependant, les éléments séparateurs introduisent des pertes, aussi, il a été proposé de remplacer les éléments discrets par des éléments optiques intégrés ce qui permet d'améliorer le bilan énergétique. Ces aspects sortent du cadre de l'invention.

Associés au photodétecteur 60 sont prévus des circuits de traitement des signaux électriques présents sur la sortie de ce photodétecteurs (non représentés sur la figure). Ces signaux sont issus de la conversion photoélectrique du faisceau composite transmis par le bras de sortie 6 et capté par le photodétecteur 60.

Les deux faisceaux 12 et 13 interfèrent selon leur état de phase. Comme il a été rappelé, la différence de phase entre ces deux faisceaux dépend des perturbations non réciproques affectant les ondes circulant dans l'anneau.

Cette différence de phase $\Delta \Phi$ est donnée par la relation:

$$\Delta \Phi = \frac{1}{\lambda} \left( \frac{4 \pi L R}{c} \right) \Omega \qquad (1)$$

relation dans laquelle :
- L est la longueur de l'anneau, c'est-à-dire la longueur de la fibre optique 5 ;
- R est le rayon de l'anneau c'est-à-dire le rayon moyen de la bobine constituée par les pires de fibres optiques enroulée ;
- $\lambda$ la longueur d'onde dans le vide de l'énergie lumineuse parcourant la fibre optique 5 ;
- c la célérité de la lumière dans le vide ;
- et $\Omega$ la vitesse de rotation mesurée.

La mesure dépend donc linéairement de l'inverse de la longueur d'onde $\lambda$. Toute variation de ce paramètre affecte le facteur d'échelle.

La longueur d'onde dépend donc directement de la stabilité d'émission de la source 10.

Or, en général, il s'agit d'une source à semi-conducteur ; comme il est connu, une telle source est affectée par les variations de température, comme tout élément semiconducteur. Elle émet un spectre centré sur une longueur d'onde moyenne que l'on appelera dans ce qui suit $\lambda_o$.

L'invention vise à stabiliser cette longueur d'onde moyenne sans avoir recours à des éléments actifs de contre-réaction.

Pour fixer les idées sans que cela soit limitatif, on se placera dans ce qui suit dans le cadre d'un spectre d'émission de type Gaussien dont la variation de l'énergie lumineuse est fonction de la longueur d'onde décrite par la relation :

$$e^{-\left( \frac{\lambda - \lambda_o}{\Delta \lambda_S} \right)^2} \qquad (2)$$

relation dans laquelle :
- $\lambda$ est une longueur d'onde quelconque du spectre ;
- $\lambda_o$ la longueur d'onde moyenne ;
- $\Delta \lambda_S$ la demi largeur du spectre.

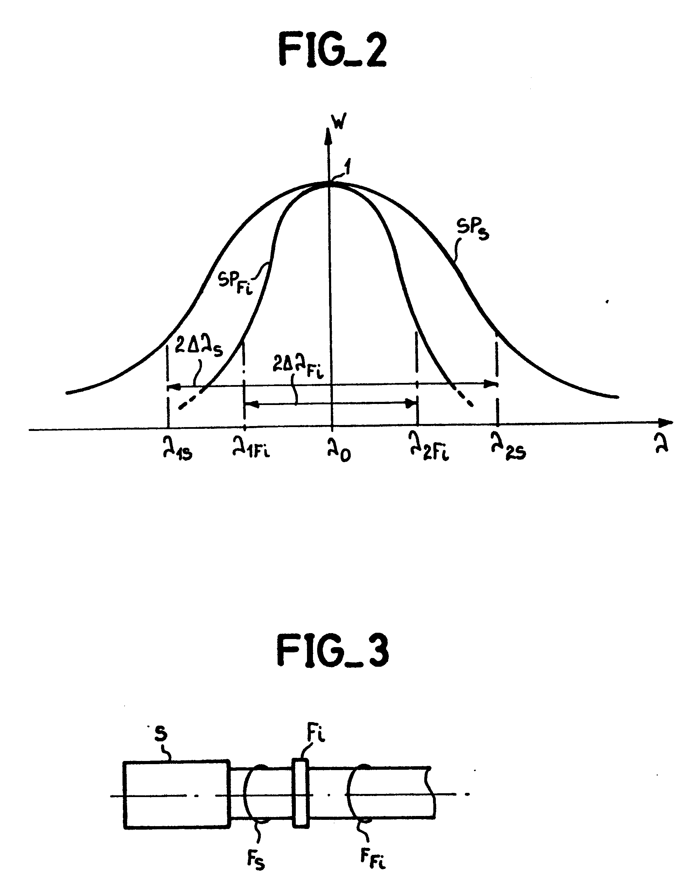

La figure 2 illustre un tel spectre $SP_S$.

L'axe vertical représente l'énergie lumineuse W en unités relatives arbitraires et l'axe horizontal les longueurs d'onde.

La largeur $\Delta \lambda_S$ du spectre émis par la source $SP_S$ peut être définie par la différence entre deux longueurs d'ondes extrêmes $\lambda_{1S}$ et $\lambda_{2S}$ pour lesquelles l'énergie est égale à (1/e), la valeur maximale étant supposée égale à l'unité.

Selon l'invention, comme illustré schématiquement sur la figure 3, on va associer à une source S émettant selon le spectre qui vient d'être décrit, un filtre optique passe-bande Fi de spectre également centré sur la longueur d'onde $\lambda_o$, mais de largeur inférieure au spectre $SP_S$. On utilise de préférence un filtre interférentiel.

Il s'agit de filtres qui mettent à profit le phénomène d'interférence pour laisser passer ou pour réfléchir

3

certaines régions spectrales. Ces filtres se composent d'une multitude de couches minces dont l'épaisseur optique correspond en général à un quart de la longueur d'onde centrale ou à un multiple de cette valeur. En fonction du genre, du nombre, de l'épaisseur et de la disposition des couches, on peut réaliser un grand nombre de largeurs de bande à transmission élevée ou à réflexion élevée.

Ces filtres sont disponibles dans le commerce et sont d'ailleurs susceptibles de différentes variantes d'exécution, par exemple une des variantes est constituée par des filtres interférentiels dits MDI.

Il s'agit de filtres interférentiels à composant métalliques et diélectriques (Metal-Dielectric Interference filters). Ces filtres se composent de couches métalliques minces à transmission partielle qui sont séparées les unes des autres par des couches d'espacement diélectriques et exemptes d'absorption. L'épaisseur des couches d'espacement détermine essentiellement la situation spectrale $\lambda$, de la bande passante qui a l'onde la plus longue.

Ce type de filtre est utilisé la plupart du temps comme filtre passe-bande.

Les dérivés en longueur d'onde des spectres de ces filtres en fonction de la température dépendent essentiellement de variations géométriques. Le coefficient de dérive est typiquement de l'ordre de $10^{-6}/°C$ et cette dérive, comme il apparaîtra dans ce qui suit peut être négligée devant les dérives dues à la source.

Le faisceau $F_e$ émis par la source S a donc les caractéristiques du spectre $SP_S$ décrit en relation avec la figure 2.

Sur cette figure a également été représenté le spectre énergétique en transmission du filtre Fi.

La demi-largeur du spectre $\Delta\lambda_{Fi}$ est la différence entre deux longueurs d'onde $\lambda_{1Fi}$ et $\lambda_{2Fi}$ définis de la même manière qu'en ce qui concerne le spectre $SP_S$. La formule décrivant le coefficient de transmission du filtre Fi est donc de la forme :

$$e^{-\left(\dfrac{\lambda - \lambda_0}{\Delta\lambda_{Fi}}\right)^2} \tag{3}$$

$$\text{et} \quad \Delta\lambda_{Fi} = \varepsilon\,\Delta\lambda_S \tag{4}$$

avec $\varepsilon < 1$

Si, par suite de variations de température, le spectre émis $SP_S$ se décale en longueur d'onde d'une valeur $\delta\lambda_0$, en sortie du filtre Fi, la faisceau $F_{Fi}$ (figure 3) va voir sa longueur d'onde moyenne décalée d'une valeur $\delta\lambda'_0$ obéissant à la relation:

$$\lambda'_0 = \frac{\varepsilon^2}{1 + \varepsilon^2}\,\lambda_0 \tag{5}$$

$$\text{soit} \quad \lambda'_0 \simeq \varepsilon^2\,\lambda_0$$

si $\varepsilon$ est beaucoup plus petit que l'unité.

On constate que les variations de la longueur d'onde moyenne de l'ensemble "source S - filtre F" sont donc très inférieures à celles de la longueur d'onde du faisceau émis par la source S selon le but que se fixe l'invention.

Naturellement la puissance optique captée par le détecteur (figure 1 : 60) est également réduite par le facteur $\varepsilon$ mais l'inconvénient qui en résulte n'est pas aussi important que le laisse supposer la valeur de $\varepsilon$.

En effet, le rapport signal à bruit est limité par le bruit photonique. Ce rapport suit une loi en racine carrée de la puissance détectée. Il s'ensuit que le facteur signal à bruit, qui est un des paramètres déterminant à considérer, n'est réduit que par un facteur : $\sqrt{\varepsilon}$.

Pour fixer les idées, un exemple de réalisation concrète va maintenant être décrit.

On utilise comme source une diode superluminescente de type Ga Al As (Gallium-Aluminium-Arsenic), émettant un spectre centré sur la longueur d'onde $\lambda_0 = 830$ nm et de largeur $\Delta\lambda_S = 10$ nm.

Si l'on admet une stabilisation en température grossière de cette source, typiquement de l'ordre du degré Celsius, le rapport $(\delta\lambda_0/\lambda_0)$ est inférieur à $3.10^{-4}$.

L'option prise consistant à négliger les dérives de longueur propre au filtre est donc bien justifiée $(10^{-6}/°C)$.

Si l'on place devant le détecteur un filtre de largeur $\Delta\lambda_{Fi} = 2$ nm, soit $\varepsilon = 0,2$ ; alors les fluctuations $(\delta\lambda_0/\lambda_0)$ de l'ensemble "source-filtre" sont réduites dans un facteur $\varepsilon^2 = 0,04$ et deviennent inférieures à $3.10^{-6}$.

Pour sa part, le rapport signal à bruit n'est réduit que d'un facteur $\sqrt{\varepsilon} = 0,45$.

L'invention permet donc d'obtenir très simplement un compromis raisonnable entre la stabilisation du facteur d'échelle et la sensibilité du système.

Selon l'invention, le dispositif stabilisateur ainsi décrit est appliqué à un gyromètre à fibre optique comprenant principalement un interféromètre du type représenté en figure 1. Le dispositif stabilisateur est alors placé sur le chemin des faisceaux lumineux 12, 13 issus de la fibre optique 5 après recombinaison et avant détection par les moyens de détection 60. Selon un exemple de réalisation préféré non représenté sur la figure, le dispositif stabilisateur est placé dans le bras 6 de l'interféromètre de la figure 1.

L'invention n'est pas limitée aux seuls exemples de réalisation spécifiquement décrit. Elle s'applique à tous systèmes utilisant une source à spectre large.

En outre, bien qu'il ait été supposé implicitement qu'il s'agissait de filtres optiques passe-bande fonctionnant en transmission, les filtres fonctionnant en réflexion sont tout aussi utilisables s'ils vérifient les conditions propres au dispositif selon l'invention : spectre réfléchi centré sur $\lambda_o$ et de largeur inférieure à celui de la source.

## Revendications

1. Dispositif stabilisateur de la longueur d'onde moyenne ($\lambda_o$) d'une source (S) d'énergie radiante émettant un faisceau ($F_S$) à large spectre ($SP_S$), caractérisé en ce qu'il comprend, placé sur le chemin optique dudit faisceau ($F_S$) un filtre optique passe-bande (Fi) à spectre ($SP_{Fi}$) centré sur la dite longueur d'onde moyenne ($\lambda_o$) et de largeur inférieure à celle du spectre ($SP_S$) du faisceau ($F_S$) émis par la source (S).

2. Dispositif selon la revendication 1, caractérisé en ce que le filtre optique passe-bande (Fi) est un filtre interférentiel.

3. Dispositif selon la revendication 1, caractérisé en ce que ladite source (S) est une diode superluminescente de type Gallium-Aluminium-Arsenic émettant dans un spectre centré sur une longueur d'onde moyenne ($\lambda_o$) de 830 nm et de largeur 10 nm.

4. Dispositif selon la revendication 3, caractérisé en ce que le filtre optique passe-bande (Fi) a une largeur de spectre égale à 1 nm.

5. Gyromètre constitué d'un interféromètre en anneau comprenant une fibre optique monomode (5) formant ledit anneau, une source d'émission d'énergie radiante (10) à spectre large centré sur une longueur d'onde moyenne ($\lambda_o$), des moyens de séparation et de mélange (4) de rayonnement pour diriger simultanément et par parties égales (12, 13), l'énergie émise vers les deux extrémités (50, 51) de la fibre optique monomode (5) et pour recombiner le rayonnement émergeant des deux extrémités (50, 51) de la fibre optique monomode (5) et des moyens de détection (60) de ce rayonnement émergeant recombiné ; caractérisé en ce qu'il comprend un dispositif de stabilisation des fluctuations de ladite longueur d'onde moyenne ($\lambda_o$) selon l'une quelconque des revendications 1 à 4, le filtre optique passe-bande (Fi) étant disposé en amont des moyens de détections (60) sur le chemin optique dudit rayonnement (12, 13) émergeant recombiné.

FIG_1

## FIG_2

## FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 148 925  (LICENTIA PATENT-VERWALTUNGS-GmbH) * Page 5, lignes 28-31;  page  6, lignes 1-25; revendications * | 1-3 | G 01 C   19/64 |
| A | | 5 | |
| | ----- | | |

|  |
|---|
| **DOMAINES TECHNIQUES RECHERCHES (Int. Cl.4)** |
| G 01 C G 02 B |

Le présent rapport de recherche a été établi pour toutes les revendications

| Lieu de la recherche | Date d'achèvement de la recherche | Examinateur |
|---|---|---|
| LA HAYE | 09-02-1987 | PFAHLER R. |